# EUROPEAN PATENT SPECIFICATION

(11) **EP 2 690 299 B1**
(45) Date of publication and mention of the grant of the patent: **16.08.2017**
(21) Application number: 12761023.6
(22) Date of filing: 07.03.2012
(51) Int. Cl.: F16C 41/00, F16C 19/36, F16C 33/58, F16C 19/52, G06K 19/07, G06K 19/02, F16C 43/04

(54) **ROLLING BEARING EQUIPPED WITH IC TAG**
MIT EINEM IC-ETIKETT AUSGESTATTETES WÄLZLAGER
PALIER À ROULEMENT ÉQUIPÉ D'UNE ÉTIQUETTE À CI

(30) Priority: 22.03.2011 JP 2011062243
(43) Date of publication of application: 29.01.2014
(73) Proprietor: NTN Corporation, Osaka-shi, Osaka 550-0003 (JP)
(72) Inventor: ITO Hiroyoshi, Kuwana-shi Mie 511-0811 (JP)
(74) Representative: Grünecker Patent- und Rechtsanwälte PartG mbB
(86) International application number: PCT/JP2012/055781
(87) International publication number: WO 2012/128035

(56) References cited:
- JP-A- 2005 121 176
- JP-A- 2006 038 151
- JP-A- 2006 046 557
- JP-A- 2006 226 498
- JP-A- 2006 226 498
- JP-A- 2007 057 480
- JP-A- 2010 211 771
- JP-B1- 2 946 038
- JP-U- H0 663 358
- US-A1- 2009 115 616
- US-A1- 2009 190 872
- US-B1- 6 607 135

## Description

### FIELD OF THE INVENTION

The present invention relates to a rolling bearing device equipped with an IC tag capable of informational exchange by non-contact communication, which is used for a construction machine, an industrial machine or the like.

### BACKGROUND OF THE INVENTION

There is known an IC tag using RFID (Radio Frequency Identification) technology, which enables informational exchange by non-contact communication.

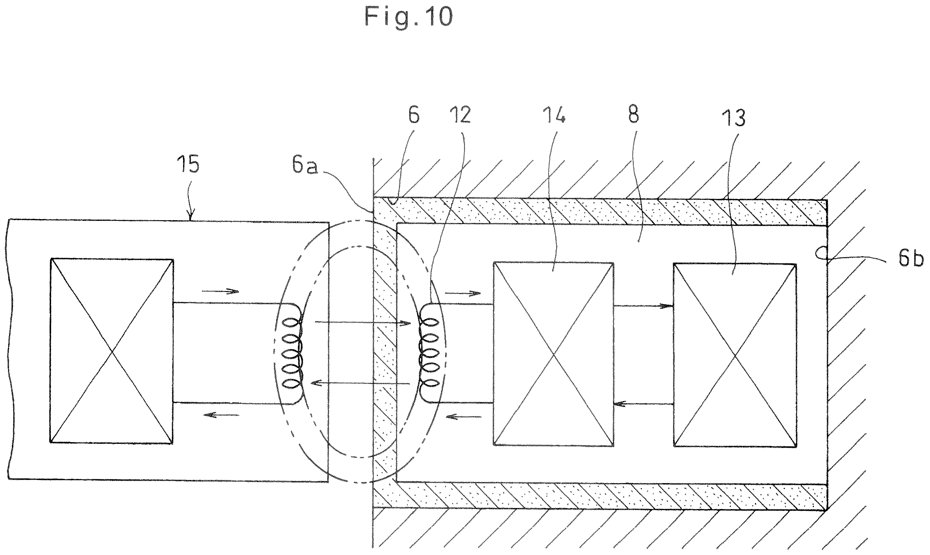

As shown in Fig. 10, an IC tag 8 capable of non-contact communication is able to write and read information by a memory 13 and a processing circuit 14. The IC tag 8 is also able to send electrical power and data to a reader/writer 15 or the like by electromagnetic wave or microwave transmitted from and to a coil antenna 12 connected to the processing circuit 14.

There is known a technique in which such an IC tag is attached to the surface of a machine device (e.g., a rolling bearing device) or part thereof, and the IC tag is caused to store various types of information including the history, application and location of the device or part thereof, such as the identification information, production date, lot number and maintenance history of the device or part thereof, wherein the information stored in the IC tag is read out during the maintenance operations, and also is updated appropriately.

Rolling bearing devices having the same appearance are frequently different from one another with respect to the specification and production conditions, such as the type of raw material, the heat treatment conditions for the raw material, the internal clearance, and the type of the grease to be filled in the internal clearance. Therefore, the identification information of a rolling bearing device is very valuable, and it is especially desired to obtain the information as it is necessary for grasping the current status of the device and for the device maintenance not only before the use of the device (e.g., during the storage of the device) but also during or after the use of the device (e.g., during the maintenance operations).

Electromagnetic wave is absorbed in the metal surface portion of a rolling bearing device or the like. As a technique for avoiding such interference against electromagnetic wave or microwave, there is known a technique in which a hole is formed in the metal surface portion, and the main body of the IC tag is fittedly inserted into the hole so that the antenna constituting the tip portion of the IC tag is disposed at a position as near the opening of the hole as possible. In this technique, for protecting the antenna, a thermoset resin having a relatively high stiffness is placed so as to cover and seal the antenna (Patent Document 1).

Furthermore, document JP 2006/226498 A (Patent Document 2) refers to a bearing device which comprises on outer race and an inner race, and an IC tag mounted on the inner race for performing information management. The IC tag is arranged on a bottom face of a holed portion of the inner race, and the holed portion is covered with a non-magnetic material cover on which a non-slip off structure is provided. The non-slip off structure is such that a side face of the cover is subjected to side pressure from inner faces of the holed portion, the side face of the cover and the inner faces of the holed portion are irregularly fitted to each other, or the inner faces of the holed portion are tapered from the bottom face of the holed portion toward the surface side of a bearing for the side face of the cover to come into contact with the side face of the holed portion.

### PRIOR ART DOCUMENTS

### PATENT DOCUMENTS

Patent Document 1: JP 2006-53603 A (paragraphs 0008 and 0030)

### SUMMARY OF THE INVENTION

### PROBLEMS TO BE SOLVED BY THE INVENTION

However, as mentioned above, in the attachment of the IC tag to the rolling bearing device, if the main body of the IC tag is directly, fittedly inserted into the hole formed in the surface metal portion of the device, pressure or impact caused by load or the like is exerted on the hole, thus generating strain in the surface metal portion. The strain, vibration or impact is transmitted to the IC tag and, as a result, the circuit and the antenna are broken, thus causing malfunction of the IC tag.

Further, when the antenna of the IC tag is disposed near the opening of the hole and the antenna is sealed from above using a thermoset resin, intrusion of an object from the outside into the hole can be prevented, but there is still a problem. Specifically, since external force or vibration is transmitted to the main body or antenna of the IC tag through the stiff resin layer, the circuit is likely to suffer breakage or damage, thus making it impossible for the IC tag to surely perform the function of transmitting and receiving information in a stable manner for a long time.

Especially in the case of a rolling bearing device, the rolling bearing device is sometimes attached to a target object while exerting a preload on the device for the purpose of improving the torsion precision of the axis and suppressing vibration and noise. In this case, the resin sealing the IC tag is pressed, and external vibration or impact is more easily transmitted to the main body or antenna of the IC tag. As a result, the circuit or the coil of the antenna is likely to be deformed or damaged, thus impairing the function of transmitting and receiving information through electromagnetic wave or microwave.

The above-mentioned problem is solved by the present invention, which provides a rolling bearing device equipped with an IC tag. In the present invention, when the IC tag is attached to the rolling bearing device, the main body or antenna of the IC tag is not easily susceptible to vibration or external force. Especially, even when the attachment is made while exerting a preload on the rolling bearing device, the main body or antenna of the IC tag is free from deformation. Preferably, the rolling bearing device exhibits a high resistance to oil and heat such that the device can be used in an environment where the device is operated at a high temperature and in contact with a lubricant oil, i.e., in an operating environment which is characteristic for rolling bearing devices. The rolling bearing device of the present invention can surely perform the function of transmitting and receiving information in a stable manner for a long time.

### MEANS TO SOLVE THE PROBLEMS

For solving the above-mentioned problem, the present invention provides a rolling bearing device according to claim 1 equipped with an IC tag, which comprises an outer race and an inner race, one or each of which races has a hole formed therein, wherein the or each hole has an IC tag capable of non-contact communication retained therein through a shock-absorbing body made of an elastic rubber material, wherein the shock-absorbing body is provided at the opening of the hole so as to cover the IC tag like a lid, thereby sealing the IC tag, and wherein a surface of the or each race in which the hole is formed is a surface for receiving a preload for attaching the rolling bearing device to a target object.

In the rolling bearing device of the present invention having the above-mentioned construction, the IC tag is retained through the shock-absorbing body in the hole formed in the surface portion of the outer or inner race. Therefore, even when pressure caused by external force, or external vibration or impact is exerted on the surface of the outer or inner race, such external strain, impact or vibration is absorbed in the shock-absorbing body made of an elastic rubber material.

Accordingly, the external strain, impact or vibration is not directly transmitted to the IC tag, but is diminished before being transmitted to the IC tag or is not transmitted to the IC tag. Thus, the rolling bearing device equipped with an IC tag can surely perform the function of transmitting and receiving information in a stable manner for a long time.

Further, since the shock-absorbing body is provided so that the IC tag is covered with the shock-absorbing body at the opening of the hole, pressure, strain or vibration exerted around the opening of the hole is absorbed in the shock-absorbing body made of an elastic rubber material, which covers the IC tag.

Since the surface of the or each race in which the hole is formed is a surface for receiving a preload for attaching the rolling bearing device to a target object, the preload exerted through a bearing-supporting part necessary for attaching the rolling bearing device to the target object is transmitted from around the opening of the hole to the wall surface of the hole. In this case, strain, vibration or the like is absorbed in the shock-absorbing body made of an elastic rubber material because the IC tag is retained in the hole through the shock-absorbing body.

In the present invention, the term "surface for receiving a preload" means a surface comprised of a main surface region which directly receives a preload and a neighboring surface region which forms the same plane with the main surface region. In other words, a surface for receiving a preload is the surface including all regions which may be susceptible to strain by a preload exerted for the attachment of the rolling bearing device.

When the elastic rubber material forming the shock-absorbing body is a fluoro rubber, a silicone rubber, a fluoro-silicone rubber, a nitrile rubber or a hydrogenated nitrile rubber, the rolling bearing device not only achieves the above-mentioned effect but also exhibits excellent oil resistance and excellent heat resistance.

When the hole has a roughened surface or a helicoidal surface, anchoring effect and friction coefficient are improved by virtue of the roughness of the surface, so that the shock-absorbing body around the IC tag is more strongly secured to the side wall of the hole, thereby surely preventing the IC tag from escaping from the hole.

When the hole has a helicoidal surface, the IC tag can be screw-wise secured into the hole, thereby preventing the IC tag from escaping from the hole. In this case, it is easy to attach the IC tag to the hole. Further, by changing the degree to which the IC tag is screwed into the hole, the distance (depth) of the antenna of the IC tag from the metal surface can be adjusted. Therefore, the sensitivity of the IC tag can also be easily adjusted.

When the hole has in the bottom thereof a dent for holding an adhesive, the IC tag can be secured to the hole in high adhesive strength by the adhesive held in the dent.

When the IC tag has on the outer surface thereof a rugged portion for engaging the shock-absorbing body to the IC tag, the contact surface area between the IC tag and the shock-absorbing body increases and physical locking effect is achieved by the ruggedness of the surface, so that the IC tag and the shock-absorbing body are combined in one body, thereby more surely preventing the IC tag from escaping from the hole.

From the viewpoint of achieving the above-mentioned effect to a satisfactory level, it is preferred that the rugged portion is a straight-knurled portion or a diamond-knurled portion. It is also preferred that the rugged portion comprises one or more flanges. Further, it is also preferred that the rugged portion comprises one or more peripheral grooves.

When the IC tag has an adhesive layer on the outer peripheral surface thereof and the shock-absorbing body is attached to the adhesive layer by means of adhesion, the IC tag can be surely prevented from escaping from the hole by the adhesive force.

When the IC tag is combined in one body with the shock-absorbing body by means of vulcanization or adhesion, not only can the IC tag be attached to the hole in higher efficiency while being combined in one body with the shock-absorbing body, but also the maintenance of the IC tag can be performed in higher efficiency.

In one embodiment of the present invention, the IC tag is inserted in the hole, and the hole is filled with the elastic rubber material, so that the IC tag is retained in the hole through the shock-absorbing body. In this embodiment, the IC tag can be surely combined into one body with the shock-absorbing body simply by filling the hole with the elastic rubber material having fluidity, irrespective of the shape of the IC tag. Therefore, various types of IC tags can be used.

When the IC tag is engaged to and retained in the hole due to elastic repulsive force caused by compression of the shock-absorbing body, the elastic repulsive force of the shock-absorbing body is exerted on the hole and on the engagement interface between the IC tag and the hole, so that the above-mentioned friction effect and physical locking effect are enhanced, thereby preventing the IC tag from escaping from the hole.

### EFFECT OF THE INVENTION

In the rolling bearing device of the present invention, an IC tag is attached to a hole formed in the metal surface portion of the outer or inner race through a shock-absorbing body made of an elastic rubber material. Therefore, the rolling bearing device of the present invention is advantageous in that strain or vibration caused by pressure exerted on the metal surface portion of the outer or inner race is absorbed in the shock-absorbing body made of an elastic rubber material, so that the main body or antenna of the IC tag is not easily susceptible to the external vibration or force.

Further, when the rolling bearing device is attached to a target object while exerting a preload to the rolling bearing device, the preload does not cause deformation of the main body of the IC tag. Therefore, the rolling bearing device is advantageous in that the device can surely perform the function of transmitting and receiving information in a stable manner for a long time.

The material for the shock-absorbing body is selected from predetermined various types of elastic rubber materials. Therefore, the rolling bearing device is advantageous in that the device exhibits a high resistance to oil and heat such that the device can be used in an environment in which the device is contacted with a lubricant oil or is heated. Also in this respect, the rolling bearing device has advantages of being capable of surely performing the function of transmitting and receiving information in a stable manner for a long time.

### BRIEF DESCRIPTION OF THE DRAWINGS

[Fig. 1] Fig. 1 is an enlarged fragmentary cross-sectional view showing the state in which one embodiment of the rolling bearing device equipped with an IC tag is used.
[Fig. 2] Fig. 2 is an enlarged fragmentary cross-sectional view showing the state in which the IC tag of a first embodiment is attached to the hole.
[Fig. 3] Fig. 3 is a cross-sectional view taken along line III-III of Fig. 2.
[Fig. 4] Fig. 4 is an enlarged fragmentary cross-sectional view showing the state in which the IC tag of a second embodiment is attached to the hole.
[Fig. 5] Fig. 5 is an enlarged fragmentary cross-sectional view showing the state in which the IC tag of a third embodiment is attached to the hole.
[Fig. 6] Fig. 6 is an enlarged fragmentary cross-sectional view showing the state in which the IC tag of a fourth embodiment is attached to the hole.
[Fig. 7] Fig. 7 is an enlarged fragmentary cross-sectional view showing the state in which the IC tag of a fifth embodiment is attached to the hole.
[Fig. 8] Fig. 8 is an explanatory diagram showing a method for attaching the IC tag of the first embodiment to the hole.
[Fig. 9] Fig. 9 is an explanatory diagram showing another method for attaching the IC tag of the first embodiment to the hole.
[Fig. 10] Fig. 10 is an explanatory diagram showing the state in which the IC tag attached to the hole is transmitting and receiving information.

### DETAILED DESCRIPTION OF THE PREFERRED EMBODIMENTS

Hereinbelow, embodiments of the present invention are explained with reference to the accompanying drawings.

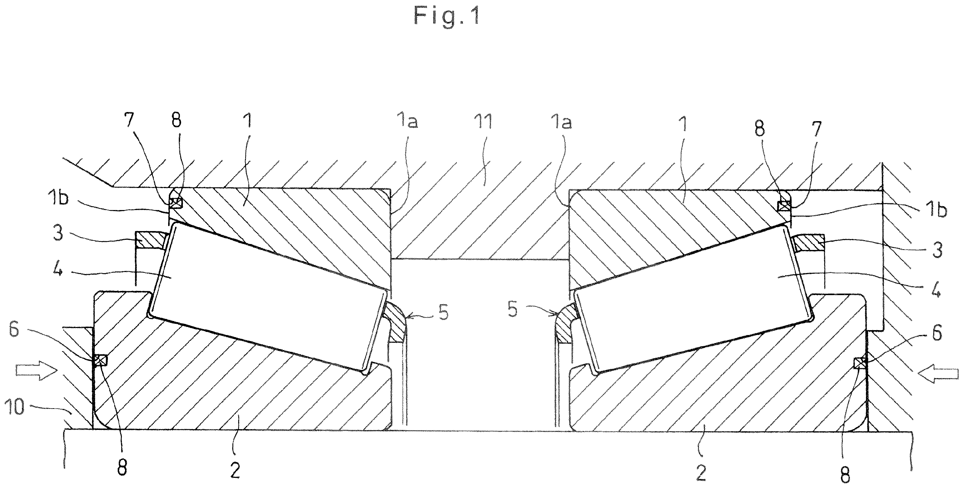

As shown in Figs. 1 to 3, the first embodiment shows a rolling bearing system comprising a pair of tapered roller bearing devices 5 each equipped with an IC tag, which are disposed back to back with each other. In each tapered roller bearing device 5, rolling elements 4 comprising tapered rollers or the like are rotatably retained by a retainer 3 between an outer race 1 and an inner race 2.

In each tapered roller bearing device 5, the outer end metal surface portions of the inner race 2 and the outer race 1 have holes 6 and 7 (holes having bottoms), respectively. An IC tag 8 capable of non-contact communication is attached to each of the holes 6 and 7 through a shock-absorbing body 9 made of an elastic rubber material.

In such a rolling bearing device, at least the outer race 1 and the inner race 2 are made of a metal, such as a bearing metal. In each tapered roller bearing device 5, the outer end surface of the inner race 2 is used as a surface for receiving a preload, and is press-contacted to a bearing-supporting part 10 in a target object, such as a reduction gear. In each tapered roller bearing device 5, the inner race 2 is held still in a non-rotating state by a preload exerted from the direction of an arrow shown in the figure. In the rolling bearing system, a rotary housing 11 is press-sandwiched and retained by end surface portions 1a (of outer races 1) which face to each other, so that the housing 11 and the outer races 1 can be rotated in one body. Further, in each tapered roller bearing device 5, the hole 7 is formed in an end surface 1b of the outer race 1, which receives no preload, and the IC tag 8 is retained in the hole 7 in the same manner as mentioned above.

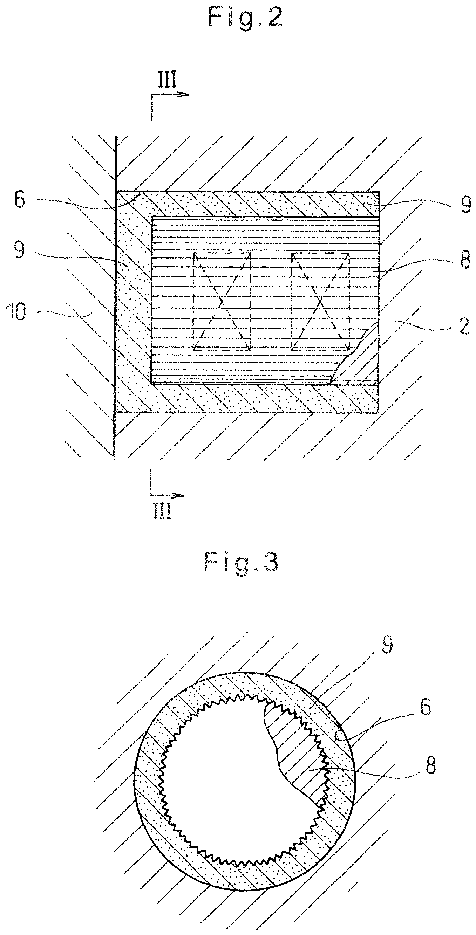

As shown in Fig. 2, the shock-absorbing body 9 made of an elastic rubber material is provided at the opening of the hole 6 so as to cover the IC tag 8 like a lid, thereby sealing the IC tag 8.

When the roller bearing device is used in an environment in which the device is lubricated with a lubricant oil and is heated, it is preferred that the elastic rubber material for the shock-absorbing body 9 is a rubber having excellent oil resistance, such as a fluoro rubber (FKM), a silicone rubber (VQM), a fluoro-silicone rubber, a nitrile rubber (NBR) or a hydrogenated nitrile rubber (HNBR).

As other examples of elastic rubber materials well-known in the art, there can be mentioned well-known rubbers and elastic resins. Specifically, an EVA resin (an ethylene/acetate vinyl copolymer resin), a butyl rubber, a polysulfide rubber and the like can be used. Further, there can also be used thermoplastic elastomers, such as a styrene/butadiene elastomer, a polyester elastomer, a polyethylene elastomer and a vinyl chloride elastomer.

With respect to the elastic rubber material, the elastic modulus thereof at, for example, 23 °C is preferably about 1 MPa to about 10 MPa, more preferably about 1 MPa to about 5 MPa, from the viewpoint of obtaining a desired shock-absorbing property.

From the viewpoint of good transmission and reception of information, it is preferred that the IC tag 8 capable of non-contact communication is attached to the hole 6 or 7 so that the coil antenna 12 (see Fig. 10) faces the opening 6a of the hole 6 (7) and the memory 13 and the processing circuit 14 are disposed near the bottom surface 6b.

With respect to the transmission method used by the Ic tag 8, there is no particular limitation. For example, there can be used a method in which electrical power and data can be sent to the reader/writer 15 by known transmission methods using electromagnetic wave, microwave, light or the like.

The IC tag 8 shown in Fig. 2 or 3 has the shape of a column and has on the outer surface thereof a straight-knurled portion as a rugged portion for engaging the shock-absorbing body 9 to the IC tag 8. However, with respect to the shape of the IC tag 8 or rugged portion thereof, there is no particular limitation so long as the shape enables the IC tag 8 to be satisfactorily combined into one body with the shock-absorbing body 9 by the increase in contact surface area between the IC tag 8 and the shock-absorbing body 9 or by the physical locking effect which is achieved by the ruggedness of the surface.

The rugged portion may be either a straight-knurled portion as mentioned above, or a diamond-knurled portion (not shown). A straight-knurled portion suppresses sliding in a rotational direction, and a diamond-knurled portion suppresses sliding in both rotational and axial directions.

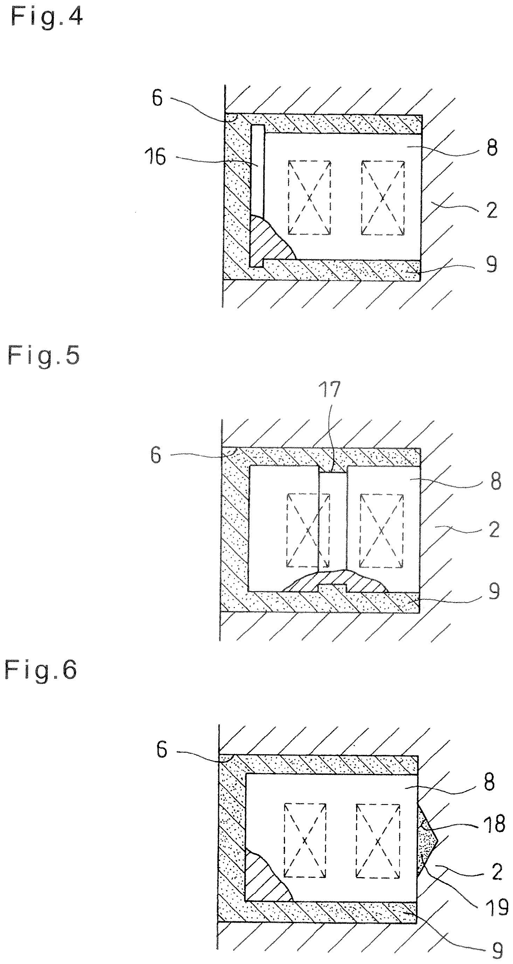

As in the case of the second embodiment shown in Fig. 4, the rugged portion may comprise a flange 16 formed at a predetermined portion of the IC tag 8. Alternatively, as in the case of the third embodiment shown in Fig. 5, the rugged portion may comprise a peripheral groove 17. In either case, the IC tag 8 is satisfactorily combined in one body with the shock-absorbing body 9 in the same manner as mentioned above, thereby surely preventing the IC tag 8 from escaping from the hole 6.

The above-mentioned flange 16 or peripheral groove 17 is not limited to one shown in Fig. 4 or 5, in which the flange or peripheral groove is formed at an end or middle portion of the IC tag 8. For example, a plurality of flanges or peripheral grooves may be formed at intervals provided along an axial direction of the IC tag 8. In this case, the escaping-preventing function can be enhanced.

As in the case of the fourth embodiment shown in Fig. 6, the hole 6 may have in the bottom thereof a dent 18 for holding an adhesive. The IC tag 8 can be attached to the hole 6 in higher adhesive strength by an adhesive 19 held in the dent.

The dent 18 shown in Fig. 6 has the shape of a cone (mortar-like shape), but the shape or size of the dent is not particularly limited so long as the dent has a well-known dent shape having an opening which has a smaller area than the end surface of the IC tag 8.

With respect to the shape of the hole 6, there is no particular limitation so long as the hole has a size allowing the IC tag to be inserted thereinto. It is preferred that the hole has a depth such that the whole of the IC tag can be inserted thereinto and such that the shock-absorbing body 9 for covering the IC tag can be disposed at the opening of the hole in the form of a layer having a predetermined thickness sufficient for the cushioning of the IC tag. The predetermined thickness of such laminar shock-absorbing body 9 is, for example, about 1 mm to about 3 mm.

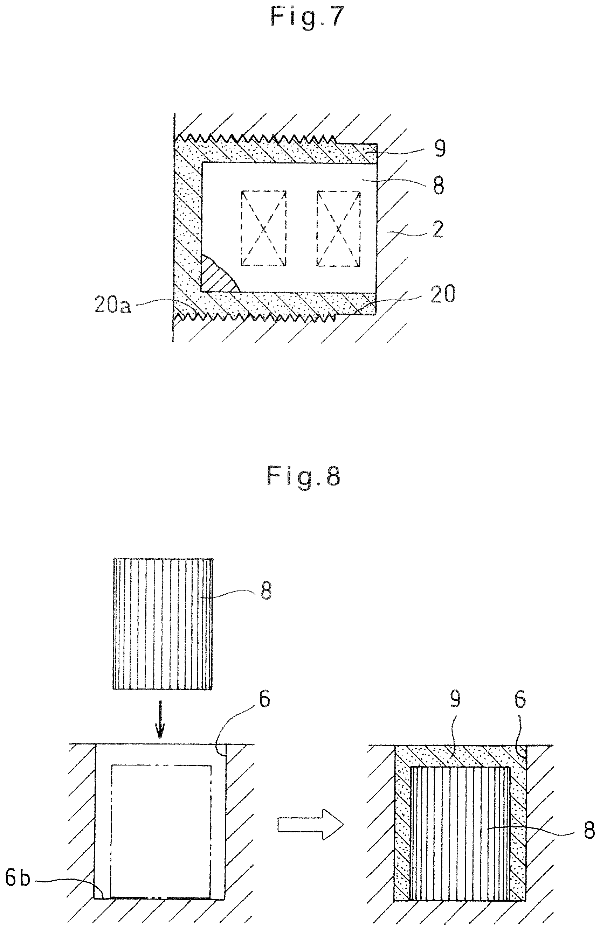

A hole 20 may have a helicoidal surface 20a in the side wall thereof, as in the case of the fifth embodiment shown in Fig. 7. When the rolling bearing device has a hole 20 having a helicoidal surface 20a in the side wall thereof, the IC tag 8 can be easily screw-wise secured into the hole together with the shock-absorbing body 9. The sensitivity of the IC tag 8 is also easily adjusted by changing the degree to which the IC tag is screwed into the hole.

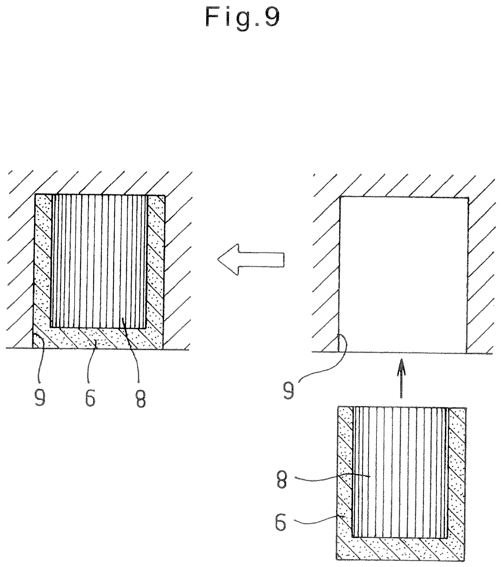

As methods for attaching the IC tag 8 of the first embodiment to the hole 6 through the shock-absorbing body 9. there can be mentioned methods shown in Figs. 8 and 9.

Specifically, as shown in Fig. 8, the IC tag 8 is inserted into a middle portion of the bottom surface 6b of the hole 6, and the hole 6 is filled with an elastic rubber material having fluidity so that the elastic rubber material covers the IC tag 8 and the gap between the IC tag 8 and the side wall of the hole 6. Then, the elastic rubber material is vulcanized (cross-linked) by heating or the like to thereby cure the elastic rubber material. As a result of such a composite molding, the IC tag 8 is combined into one body with the shock-absorbing body 9 and is secured to the hole 6.

The IC tag 8 shown in the drawings has a straight-knurled portion on the outer surface thereof. However, if desired, rugged portions having various shapes as mentioned above and a roughened or helicoidal surface can be used for improving the adhesive strength and the physical locking effect. The treatment for forming a roughened surface is performed by any methods suitable for achieving anchoring effect. Examples of such treatments include adjustment of the roughness of the surface to a desired value, press molding for forming a surface having a desired roughness, and well-known roughening treatments, such as shot blasting and etching.

Further, as shown in Fig. 9, the IC tag 8 may, prior to the insertion thereof into the hole 6, be combined into one body by adhesion with the shock-absorbing body 9 comprising a molded form of elastic rubber material. In this case, the shock-absorbing body 9 combined with the IC tag 8 is inserted into the hole 6, and is secured to the hole 6 by adhesion for preventing the shock-absorbing body 9 combined with the IC tag 8 from escaping from the hole 6. The adhesion may be performed either by vulcanization or by coating of an adhesive.

For preventing the shock-absorbing body 9 combined with the IC tag 8 from escaping from the hole 6, the shock-absorbing body 9 combined with the IC tag 8 may be attached to the hole 6 so that the IC tag 8 is engaged to the hole 6 due to elastic repulsive force caused by compression of the shock-absorbing body 9.

In the case where the IC tag 8 is engaged to the hole 6 due to elastic repulsive force of the shock-absorbing body 9, it is preferred to use a shock-absorbing body 9 having been molded so as to have a larger diameter than the hole 6 by a predetermined degree, for the purpose of obtaining a rolling bearing device having stable qualities.

With respect to the thus obtained rolling bearing device equipped with an IC tag, it is not necessary to remove the rolling bearing device completely from the target object during the maintenance operations. Specifically, when the bearing-supporting part 10 pressing the rolling bearing device for exerting a preload thereon is made of a metal which absorbs or reflects electromagnetic wave and the like, only the part is removed. Then, the information stored in the IC tag is read out by means of a reader/writer from above the shock-absorbing body and, if desired, the information is updated. By doing so, the current status of the device can be grasped and the device maintenance can be done.

In the rolling bearing device equipped with an IC tag, even when the surface of the outer race 1 or inner race 2 is a surface for receiving a preload, the strain, vibration or impact caused by external force and exerted on the surface of the outer race 1 or inner race 2 is absorbed in the shock-absorbing body 9 made of an elastic rubber material.

The strain, vibration or impact caused by external force is not directly transmitted to the IC tag 8, but is diminished before being transmitted to the IC tag 8 or is not transmitted to the IC tag 8, so that the rolling bearing device equipped with an IC tag can surely perform the function of transmitting and receiving information in a stable manner for a long time.

### DESCRIPTION OF REFERENCE NUMERALS

- 1: Outer race
- 1a: End surface
- 2: Inner race
- 3: Retainer
- 4: Rolling element
- 5: Tapered roller bearing
- 6, 7, 20: Hole
- 6a: Opening
- 6b: Bottom
- 8: IC tag
- 9: Shock-absorbing body
- 10: Bearing-supporting part
- 11: Housing
- 12: Antenna
- 13: Memory
- 14: Processing circuit
- 15: Reader/writer
- 16: Flange
- 17: Peripheral groove
- 18: Rugged Portion
- 19: Adhesive

## Claims

1. A rolling bearing device (5) equipped with an IC tag (8), which comprises an outer race (1) and an inner race (2), one or each of which races (1, 2) has a hole (6, 7, 20) formed in a surface portion thereof, wherein the or each hole (6, 7, 20) has an IC tag (8) capable of non-contact communication retained therein through a shock-absorbing body (9) made of an elastic rubber material,
wherein the shock-absorbing body (9) is provided at the opening of the hole (6, 7, 20) so as to cover the IC tag (8) like a lid, thereby sealing the IC tag (8), and wherein a surface of the or each race (1, 2) in which the hole (6, 7, 20) is formed is a surface for receiving a preload for attaching the rolling bearing device to a target object.

2. The rolling bearing device (5) according to claim 1, wherein the elastic rubber material is a fluoro rubber, a silicone rubber, a fluoro-silicone rubber, a nitrile rubber or a hydrogenated nitrile rubber.

3. The rolling bearing device (5) according to any one of claims 1 or 2, wherein the or each hole (6, 7. 20) has a roughened surface or a helicoidal surface (20a).

4. The rolling bearing device (5) according to any one of claims 1 to 3, wherein the or each hole (6, 7. 20) has in a bottom thereof a dent (18) for holding an adhesive (19).

5. The rolling bearing device (5) according to any one of claims 1 to 4, wherein the or each IC tag (8) has on an outer surface thereof a rugged portion for engaging said shock-absorbing body (9) to the IC tag (8).

6. The rolling bearing device (5) according to claim 5, wherein the or each rugged portion is a straight-knurled portion or a diamond-knurled portion.

7. The rolling bearing device (5) according to claim 5, wherein the or each rugged portion comprises one or more flanges (16) or peripheral grooves (17).

8. The rolling bearing device (5) according to any one of claims 1 to 7, wherein, in the or each hole (6, 7, 20), said IC tag (8) is combined in one body with said shock-absorbing body (9) by means of vulcanization or adhesion.

9. The rolling bearing device (5) according to any one of claims 1 to 7, wherein said IC tag (8) is inserted in the or each hole (6, 7, 20), and the hole (6, 7, 20) is filled with said elastic rubber material (9), so that said IC tag (8) is retained in the hole (6, 7. 20) through said shock-absorbing body (9).

10. The rolling bearing device (5) according to any one of claims 1 to 9, wherein said IC tag (8) is engaged to and retained in the or each hole (6, 7, 20) due to elastic repulsive force caused by compression of the shock-absorbing body (9).

## Patentansprüche

1. Wälzlagereinrichtung (5), die mit einem IC-Etikett (8) versehen ist, und eine Außenlaufbahn (1) und eine Innenlaufbahn (2) aufweist, von denen eine oder beide Laufbahnen (1, 2) eine Bohrung (6, 7, 20) aufweisen, die in einem Oberflächenbereich davon ausgebildet ist, wobei die oder jede Bohrung (6, 7, 20) ein für kontaktlose Kommunikation geeignetes IC-Etikett (8) aufweist, das darin durch einen stoßdämpfenden Körper (9) gehalten wird, der aus einem elastischen Gummimaterial hergestellt ist,
wobei der stoßdämpfende Körper (9) an der Öffnung der Bohrung (6, 7, 20) derart vorgesehen ist, dass er das IC-Etikett (8) wie einen Deckel abdeckt, wodurch das IC-Etikett (8) verschlossen wird, und wobei eine Oberfläche der oder jeder Laufbahn (1, 2), in der die Bohrung (6, 7, 20) ausgebildet ist, eine Oberfläche zur Aufnahme einer Vorlast zum Anbringen der Wälzlagereinrichtung an einem Zielobjekt ist.

2. Wälzlagereinrichtung (5) nach Anspruch 1, wobei das elastische Gummimaterial ein Fluor-Gummi, ein Silikon-Gummi, ein Fluor-Silikon-Gummi, ein Nitril-Gummi oder ein hydrierter Nitril-Gummi ist.

3. Wälzlagereinrichtung (5) nach einem der Ansprüche 1 oder 2, wobei die oder jede Bohrung (6, 7, 20) eine aufgeraute Oberfläche oder eine Spindeloberfläche (20a) hat.

4. Wälzlagereinrichtung (5) nach einem der Ansprüche 1 bis 3, wobei die oder jede Bohrung (6, 7, 20) in ihrem Boden eine Einsenkung (18) zur Aufnahme eines Haftmittels (19) aufweist.

5. Wälzlagereinrichtung (5) nach einem der Ansprüche 1 bis 4, wobei das oder jedes IC-Etikett (8) an einer Außenumfangsfläche davon einen stabilen Bereich zur Befestigung des stoßdämpfenden Körpers (9) an dem IC-Etikett (8) aufweist.

6. Wälzlagereinrichtung (5) nach Anspruch 5, wobei der oder jeder stabile Bereich ein gerändelter Bereich oder ein gekordelter Bereich ist.

7. Wälzlagereinrichtung (5) nach Anspruch 5, wobei der oder jeder stabile Bereich einen oder mehrere Flansche (16) oder Randnuten (17) aufweist.

8. Wälzlagereinrichtung (5) nach einem der Ansprüche 1 bis 7, wobei in der oder jeder Bohrung (6, 7, 20) das IC-Etikett (8) mittels Vulkanisierung oder Klebung mit dem stoßdämpfenden Körper (9) zu einem einzelnen Körper kombiniert ist.

9. Wälzlagereinrichtung (5) nach einem der Ansprüche 1 bis 7, wobei das IC-Etikett (8) in die oder jede Bohrung (6, 7, 20) eingeführt ist, und die Bohrung (6, 7, 20) mit dem elastischen Gummimaterial (9) so gefüllt ist, dass das IC-Etikett (8) durch den stoßdämpfenden Körper (9) in der Bohrung (6, 7, 20) gehalten wird.

10. Wälzlagereinrichtung (5) nach einem der Ansprüche 1 bis 9, wobei das IC-Etikett (8) aufgrund der elastischen rückstoßenden Kraft, die durch Komprimierung des stoßdämpfenden Körpers (9) hervorgerufen wird, mit der oder jeder Bohrung (6, 7, 20) in Eingriff ist und darin gehalten wird.

## Revendications

1. Dispositif de palier à roulement (5) équipé d'une étiquette à CI (8), qui comprend un chemin extérieur (1) et un chemin intérieur (2), l'un ou chacun de ces chemin (1, 2) présente un trou (6, 7, 20) formé dans une partie de surface de celui-ci, dans lequel ledit ou chaque trou (6, 7, 20) possède une étiquette à CI (8) capable d'une communication sans contact, maintenue dans ledit trou par un corps amortisseur des chocs (9) constitué d'un matériau en caoutchouc élastique,
dans lequel le corps amortisseur des chocs (9) est prévu à l'ouverture du trou (6, 7, 20) de manière à recouvrir l'étiquette à CI (8) comme un couvercle, scellant ainsi l'étiquette à CI (8), et
dans lequel une surface du ou de chaque chemin (1, 2), dans lequel est formé le trou (6, 7, 20), est une surface destinée à recevoir une précontrainte pour attacher le dispositif de palier à roulement à un objet cible.

2. Dispositif de palier à roulement (5) selon la revendication 1, dans lequel le matériau en caoutchouc élastique est un caoutchouc fluoré, un caoutchouc de silicone, un caoutchouc de fluorosilicone, un caoutchouc de nitrile ou un caoutchouc de nitrile hydrogéné.

3. Dispositif de palier à roulement (5) selon l'une quelconque des revendications 1 ou 2, dans lequel ledit ou chaque trou (6, 7 20) présente une surface rugueuse ou une surface hélicoïdale (20a).

4. Dispositif de palier à roulement (5) selon l'une quelconque des revendications 1 à 3, dans lequel ledit ou chaque trou (6, 7 20) présente dans une partie inférieure de celle-ci une indentation (18) pour retenir un adhésif (19).

5. Dispositif de palier à roulement (5) selon l'une quelconque des revendications 1 à 4, dans lequel ladite ou chaque étiquette à CI (8) possède sur sa surface extérieure une partie rugueuse pour venir en prise avec le corps amortisseur des chocs (9) au niveau de l'étiquette à CI (8).

6. Dispositif de palier à roulement (5) selon la revendication 5, dans lequel ladite ou chaque partie rugueuse est une partie moletée droite ou une partie moletée diamantée.

7. Dispositif de palier à roulement (5) selon la revendication 5, dans lequel ladite ou chaque partie rugueuse comprend une ou plusieurs brides (16) ou rainures périphériques (17).

8. Dispositif de palier à roulement (5) selon l'une quelconque des revendications 1 à 7, dans lequel, dans ledit ou chaque trou (6, 7, 20), ladite étiquette à CI (8) est combinée pour ne former qu'un seul corps avec ledit corps amortisseur des chocs (9) et ce, par vulcanisation ou adhérence.

9. Dispositif de palier à roulement (5) selon l'une quelconque des revendications 1 à 7, dans lequel ladite étiquette à CI (8) est insérée dans ledit ou chaque trou (6, 7, 20), et le trou (6, 7, 20) est rempli dudit matériau en caoutchouc élastique (9), de sorte que ladite étiquette IC (8) est maintenue dans Le trou (6, 7. 20) par ledit corps amortisseur des chocs (9).

10. Dispositif de palier à roulement (5) selon l'une quelconque des revendications 1 à 9, dans lequel ladite étiquette à CI (8) est en prise avec et retenue dans ledit ou chaque trou (6, 7, 20) grâce à la force élastique répulsive provoquée par la compression du corps amortisseur des chocs (9).
